(19) Europäisches Patentamt

European Patent Office

Office européen des brevets

(11) **EP 0 883 794 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(21) Anmeldenummer: 97911127.5

(22) Anmeldetag: **02.10.1997**

(51) Int Cl.⁷: **G01C 19/56**

(86) Internationale Anmeldenummer:
**PCT/DE97/02264**

(87) Internationale Veröffentlichungsnummer:
**WO 98/027402 (25.06.1998 Gazette 1998/25)**

(54) **VORRICHTUNG ZUR ERMITTLUNG EINER DREHRATE**

DEVICE FOR DETERMINING THE ROTATIONAL SPEED

DISPOSITIF POUR DETERMINER LA VITESSE DE ROTATION

(84) Benannte Vertragsstaaten:
**DE FR GB SE**

(30) Priorität: **19.12.1996 DE 19653021**

(43) Veröffentlichungstag der Anmeldung:
**16.12.1998 Patentblatt 1998/51**

(73) Patentinhaber: **ROBERT BOSCH GMBH**
**70442 Stuttgart (DE)**

(72) Erfinder:
• **NEUL, Reinhard**
**D-70567 Stuttgart (DE)**
• **LAMPRECHT, Dirk**
**D-71384 Weinstadt (DE)**

(56) Entgegenhaltungen:
WO-A-87/02468          US-A- 4 759 220
US-A- 4 896 268

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einer Vorrichtung zur Ermittlung einer Drehrate nach der Gattung des Hauptanspruchs.

Die Verwendung von Drehratensensoren, die den Coriolis-Effekt ausnutzen, ist im Zusammenhang mit Systemen zur Fahrdynamik-Regelung bei Kraftfahrzeugen bekannt. Solche Drehratensensoren bestehen üblicherweise aus einer oder mehreren Massen, die durch eine elektrische Oszillatorschaltung in mechanische Schwingungen mit konstanter Frequenz versetzt werden. Auf der oder den Massen sind ein oder mehrere Sensorelemente angebracht, die beschleunigungsabhängige Ausgangssignale abgeben und bei Drehung des schwingenden Systems auch die auf die schwingenden Massen wirkende Coriolis-Beschleunigung erfassen. Solche Drehratensensoren können beispielsweise als mikromechanische Sensoren ausgestaltet sein. Sie werden üblicherweise mit Hilfe einer analogen Auswertesschaltung ausgewertet. Das Problem bei der Auswertung der Signale eines Drehratensensors besteht darin, daß das drehratenproporionale Coriolis-Beschleunigungssignal aus den übrigen Signalbestandteilen extrahiert werden muß. Bei analogen Auswerteschaltungen, wie sie beispielsweise aus der US-PS-4,759,220 bekannt sind, sind aufwendige Auswerteschaltungen erforderlich.

Aus der Druckschrift US-A-4,896,268 ist ein Drehratensensor mit zwei Ausgangssignalen in Form von Sigma-Delta-Signalen bekannt. Diese beiden Signale werden unter Verwendung eines phasensynchronen Vorzeichensignales in einem Multiplikator demoduliert und nachfolgend mit Hilfe von Zählern weiterverarbeitet. Die Zählerinhalte werden dann mittels eines Mikroprozessors weiterverarbeitet und schließlich in ein Analogsignal umgewandelt.

Vorteile der Erfindung

Die erfindungsgemäße Vorrichtung zur Ermittlung einer Drehrate mit den Merkmalen des Anspruchs 1 hat demgegenüber den Vorteil, daß nur ein geringer Schaltungs- und Abgleichaufwand erforderlich ist, der gegenüber den analogen Konzepten deutliche Vorteile hat. Die Umsetzung der Beschleunigungssignale in digitale Worte mit Wortbreiten, die der geforderten Auflösung entsprechen, wird in vorteilhafter Weise vermieden. Erreicht werden diese Vorteile, indem eine rein digitale Signalverarbeitung erfolgt, bei der direkt die pulsweitenmodulierten oder sigma-delta-codierten Signale der Beschleunigungssensoren verwendet werden. Dadurch wird in vorteilhafter Weise eine Abtastung der Beschleunigungssensorsignale vermieden, wodurch auf die damit verbundenen hohen Abtastfrequenzen bzw. Auflösungsbeschränkungen, insbesondere bei pulsweitenmodulierten Beschleunigungssignalen verzichtet werden kann.

Weitere Vorteile der Erfindung werden durch die in den Unteransprüchen angegebenen Maßnahmen erzielt.

Zeichnung

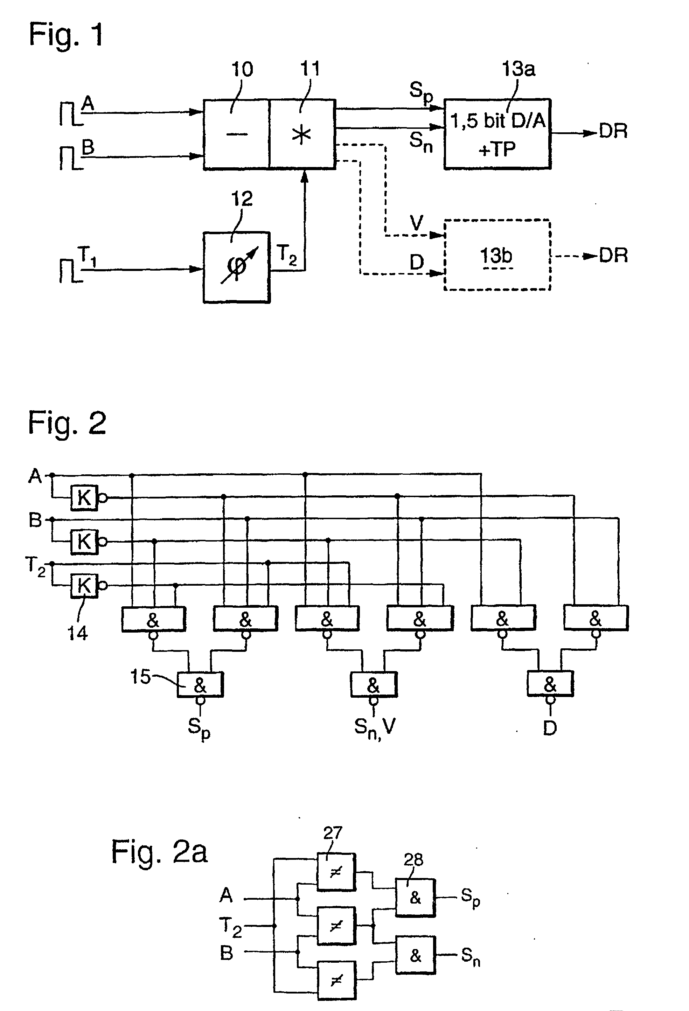

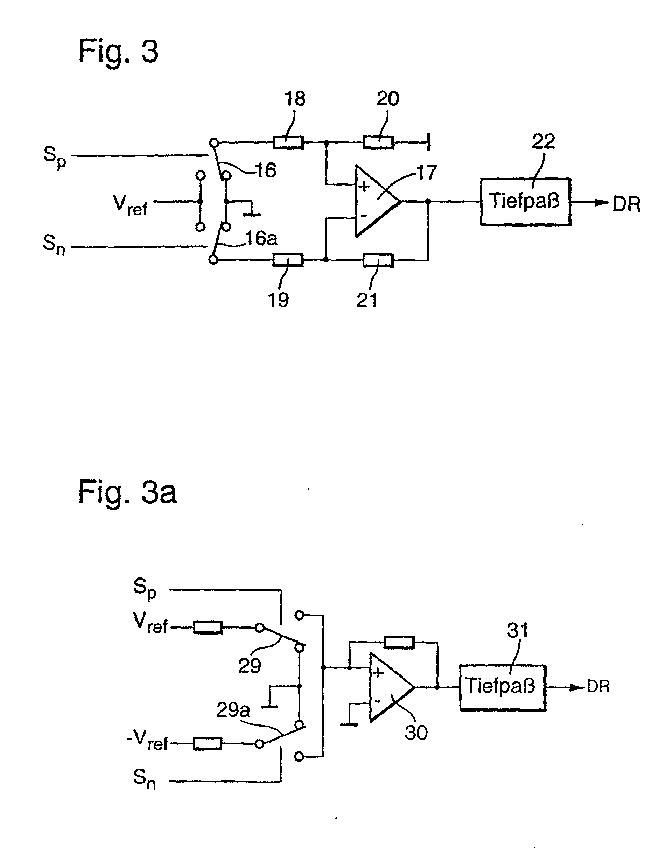

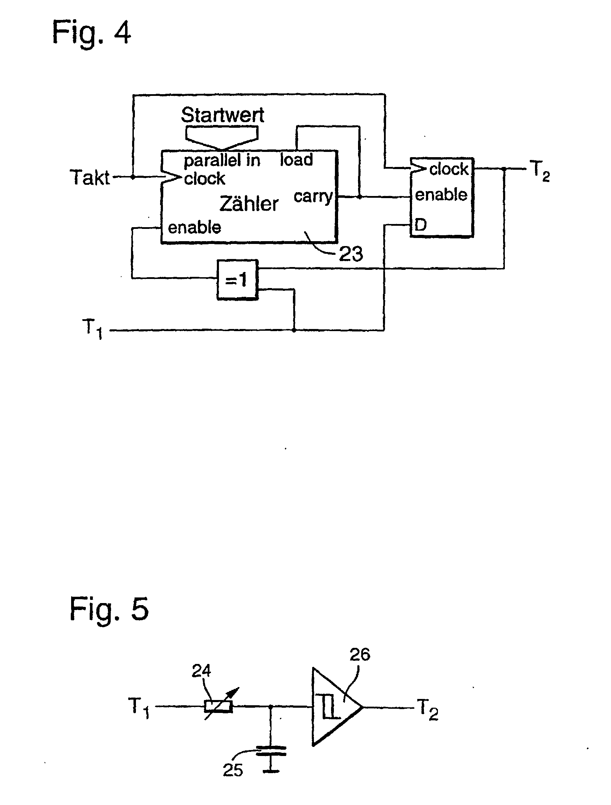

Ausführungsbeispiele der Erfindung sind in der Zeichnung dargestellt und werden in der nachfolgenden Beschreibung näher erläutert. Im einzelnen ist in Figur 1 ein Blockschaltbild einer erfindungsgemäßen digitalen Signalverarbeitung angegeben. Figur 2 zeigt eine digitale Schaltung, mit der die in Tabelle 1 aufgezeigte Wahrheitstabelle realisiert werden kann. In Figur 3 ist ein Ausführungsbeispiel für einen Digital/Analog-Wandler und Tiefpaß dargestellt. In den Figuren 4 und 5 sind zwei Varianten für digitale Phasenschieber aufgezeigt, wobei die Variante nach Figur 4 mit Referenztakt arbeitet und die nach Figur 5 mit Monoflop.

Beschreibung

Figur 1 zeigt ein Blockschaltbild der vorgeschlagenen digitalen Signalverarbeitung. Diese digitale Signalverarbeitung umfaßt einen Block 10, in dem die digitale Subtraktion der Beschleunigungssignale A und B stattfindet. Diese Beschleunigungssignale A und B kommen von je einem Beschleunigungssensorelement. Bei den Signalen handelt es sich pulsweitenmodulierte Signale oder um sogenannte sigma-delta-Signale. Diese Signale umfassen Signalanteile, die von der Beschleunigung der schwingenden Massen des Drehratensensors und durch die durch die Einwirkung der Coriolis-Kraft auftretenden Beschleunigungen verursacht werden.

Neben dem Block 10 zur digitalen Subtraktion umfaßt die digitale Verarbeitungsschaltung einen Block 11 zur digitalen Multiplikation. Dieser Block 11 zur digitalen Multiplikation steht mit dem Block 10 zur digitalen Subtraktion in Verbindung und erhält außerdem ein Signal $T_2$, das in einem digitalen Phasenschieber 12 aus dem rechteckförmigen Trägersignal $T_1$ erzeugt wird. Das Trägersignal $T_1$ wird aus dem Anregungssignal für den schwingenden Körper gewonnen.

Am Ausgang des Blocks 11 entstehen zwei Signale, wobei das eine Signal V das Vorzeichen angibt. Das zweite Signal D ist ein Datenbit. Die beiden Signale V und D bzw. alternativ die später erläuterten Signale $S_n$, $S_p$ werden im Digital/Analog-Wandler und Tiefpaß 13a bzw. im digitalen Tiefpaß 13b weiterverarbeitet. Am Ausgang des DititaI/Analog-Wandlers und des Tiefpasses 13 steht die Drehrate DR zur Verfügung, die das Nutzsignal darstellt. Die Auswerteschaltung nach Figur 1 benötigt keine Umsetzung der Eingangssignale in Digitalwörter. Sie verwendet direkt die pulsweitenmodulierten Beschleunigungssignale oder die sigma-delta-Signale, die nur ein Bit zur Codierung benötigen. Beispiele für den Aufbau der einzelnen Blöcke 10, 11, 12 und 13 werden im folgenden näher beschrieben. Der Block 10 zur digitalen Subtraktion und der Block 11 zur digitalen Multiplikation läßt sich vorteilhafterweise zu einem einfachen Booleschen Schaltnetz zusammenfassen, das durch die in Tabelle 1 angegebene Wahrheitstabelle beschrieben wird. Durch Einsatz eines solchen Booleschen Schaltnetzes entfällt die Notwendigkeit einer Abtastung der Beschleunigungssignale A und B.

Tabelle 1

| $T_2$ | A | B | V | D | $S_p$ | $S_m$ | Wert |
|---|---|---|---|---|---|---|---|
| 0 | 0 | 0 | 0 | 0 | 0 | 0 | 0 |
| 0 | 0 | 1 | 1 | 1 | 0 | 1 | -1 |
| 0 | 1 | 0 | 0 | 1 | 1 | 0 | +1 |
| 0 | 1 | 1 | 0 | 0 | 0 | 0 | 0 |
| 1 | 0 | 0 | 0 | 0 | 0 | 0 | 0 |
| 1 | 0 | 1 | 0 | 1 | 1 | 0 | +1 |
| 1 | 1 | 0 | 1 | 1 | 0 | 1 | -1 |
| 1 | 1 | 1 | 0 | 0 | 0 | 0 | 0 |

Diese Wahrheitstabelle läßt sich mit ganz einfachen logischen Schaltnetzen nach folgenden Booleschen Gleichungen realisieren:

$$V = \bar{A}\,B\bar{T}_2 + A\bar{B}\,T_2$$

$$D = A\bar{B} + \bar{A}\,B$$

$$S_p = A\bar{B}\,\bar{T}_2 + \bar{A}\,BT_2$$

$$S_n = \bar{A}\,B\bar{T}_2 + A\bar{B}\,T_2 = V$$

Die Bedeutung der einzelnen Bezeichnungen ist wie folgt:

V und D sind Vorzeichen und Datenbit in Zweierkomplement-Darstellung,
$S_p$ und $S_n$ stellen das positive und negative Schaltsignal dar.

Eine elektronische Schaltung, mit der sich die in Tabelle 1 dargestellte Wahrheitstabelle realisieren läßt, ist in Figur 2 dargestellt. Dieser Schaltung werden die Signale A, B und $T_2$ zugeführt. Die Schaltung umfaßt lediglich Mittel zur Komplementbildung 14 sowie NAND-Gatter 15 und liefert an ihren Ausgängen ein positives Schaltsignal $S_p$, ein negatives Schaltsignal $S_n$, das dem Vorzeichen V entspricht sowie ein Datenbit D. Wird nur $S_p$ und $S_n$ gebraucht, so kann auch die Schaltung nach Figur 2a verwendet werden, die nur 3 EXOR-Gatter 27 und 2 AND-Gatter 28 benötigt.
Für die digitale Weiterverarbeitung sind Vorzeichen V und Datenbit D interessant, wobei Vorzeichen und Datenbit in Zweierkomplementdarstellung erhalten werden. Weiterhin sind positives und negatives Schaltsignal Sp und $S_n$ zur Steuerung des 1,5 Bit D/A-Umsetzers nach Figur 3 geeignet. Der Ausgang der digitalen Schaltung nach Figur 2 kennt drei diskrete Werte, -1, 0 und +1. Deshalb kann der Wandler auch als 1,5 Bit-Wandler bezeichnet werden, da ein 2-Bit-Wandler vier diskrete Werte verarbeiten könnte.
Der Digital/Analog-Wandler und Tiefpaß 13 ist in Figur 3 ausführlicher dargestellt. Eine alternative Schaltung dazu ist in Figur 3a angegeben. Diese Schaltung umfaßt zwei Schalter 29, 29a, die jeweils zwischen $V_{ref}$ und $S_p$ bzw.

- $V_{ref}$ und $S_p$ umschalten. Dem nachfolgenden Operationsverstärker 30 werden dadurch am invertierenden Eingang die Signale $S_p$, $V_{ref}$, -$V_{ref}$ oder $S_n$ zugeführt. Am Ausgang des nachfolgenden Tiefpasses 31 entsteht das Drehratensignal DR.

In der Schaltung nach Figur 3 dient der Digital/Analog-Wandler und Tiefpaß 13 dazu, das gewünschte Drehratensignal DR aus dem in der digitalen Schaltung 10, 11 und 12 erzeugten Signal auszufiltern. Diese Schaltung besitzt die Eigenschaft, daß das gewünschte Drehratensignal im Spektrum im Basisband auftritt. Daher muß der Digital/Analog-Wandler und Tiefpaß nur noch die digital codierten Werte in analoge umwandeln und mit einem anschließenden Tiefpaß das Basisband herausfiltern. Dies kann mit der in Figur 3 beschriebenen Schaltung erfolgen. Diese Schaltung umfaßt Schalter 16, 16a die z. B. als einfache CMOS-Ausgänge von Gattern ausgebildet sind, die die Eingänge der Operationsverstärkerschaltung 17 auf Masse oder auf eine Referenzspannung $V_{ref}$ legen. Bei der Beschaltung des Operationsverstärkers 15 sind noch die Widerstände 18, 19, 20 und 21 erforderlich. Der sich an den Operationsverstärker 17 anschließende Tiefpaß ist mit 22 bezeichnet. Die erforderliche Ordnung des Tiefpasses hängt von den Gegebenheiten des Drehratensensors ab. Für eine Bandbreite des Drehratensignales von 50 Hz, eine Schwingfrequenz des Sensors und damit Trägerfrequenz $T_1$ von 2 KHz und eine Grundfrequenz der pulsweitenmodulierten Beschleunigungssignale von 200 KHz wird ein Tiefpaß dritter Ordnung benötigt, um die gewünschte Filterwirkung zu erzielen.

Die Schaltung nach Figur 3a arbeitet analog zu der Schaltung nach Figur 3, nur daß hier Ströme und nicht Spannungen geschaltet werden.

Mit den Signalen V (Vorzeichen) und D (Datenbit) könnte alternativ zum analogen Ausgang auch direkt ein digitaler Tiefpaß beaufschlagt werden. Eine solche Vorgehensweise eignet sich besonders bei sigma-delta-codierten Beschleunigungssignalen, da bei diesen Signalen bereits ein Abtastraster vorgegeben ist.

Beispiele für die Ausgestaltung eines digitalen Phasenschiebers 12 werden in den Figuren 4 und 5 aufgezeigt. Ein digitaler Phasenschieber wird benötigt um Phasendrehungen zu berücksichtigen, die in den Beschleunigungssensoren bzw. Beschleunigungssensorelementen auftreten und um ein Trägersignal bereitzustellen, das in Phase mit den Coriolis-Beschleunigungsanteilen ist.

In Figur 4 ist eine erste Variante eines digitalen Phasenschiebers mit Referenztakt dargestellt. Bei diesem Phasenschieber wird die Phasenverschiebung digital über den Startwert des Zählers 23 eingestellt. Bei einer Trägerfrequenz $T_1$ von 2 KHz erreicht man mit einem 8 MHz-Takt eine Auflösung von weniger als 0,1°. Für eine Phasenverschiebung von ca. 0 bis 180° wird ein 11 Bit-Zähler benötigt. Da der Takt asynchron zur Trägerfrequenz läuft, hat das phasenverschobene Trägersignal einen Phasenjitter, der so groß ist wie die Auflösung. Für eine Auflösung von 0,1° beträgt also auch der Phasenjitter 0,1°. Dieser Phasenjitter kann verkleinert werden, indem die Auflösung erhöht wird oder indem in einer zweiten Variante dieses Phasenschiebers die Takterzeugung mit einer "Phase Locked Loop"-(PLL) erfolgt, bei der das Taktsignal phasenstarr an die Trägerfrequenz $T_1$ angekoppelt ist.

In einer dritten Variante nach Figur 5 kann der Phasenschieber auch unter Verwendung eines Monoflops aufgebaut sein. Die Phasenverschiebung wird dann mit Hilfe eines RC-Gliedes 24, 25 erzeugt. An dieses kann sich ein Gatter mit Schmitt-Trigger-Eingang 26 anschließen, wenn seine Hysterese-Kennlinie symmetrisch zwischen den Versorgungsspannungen liegt. Falls dies nicht der Fall ist, muß anstelle des Gatters mit Schmitt-Trigger-Eingang 26 ein Komparator eingesetzt werden, mit einer Vergleichsspannung bei der halben Versorgungsspannung.

Durch Einsatz der vorstehend beschriebenen digitalen Bauelemente läßt sich die Drehrate DR zuverlässig und einfach aus den Ausgangssignalen A und B der Sensorelemente eines Drehratensensors ermitteln.


**Patentansprüche**

1.  Vorrichtung zur Ermittlung einer Drehrate die einen Drehratensensor umfasst, der zwei Ausgangssignale (A und B) abgibt, die unter anderem ein Maß für die Coriolis-Beschleunigung und damit auch für die Drehrate sind, **dadurch gekennzeichnet, dass** die Ausgangssignale (A, B) als pulsweitenmodulierte- oder sigma-delta-Signale einer digitalen Auswerteschaltung (10) zugeführt werden, die digitale Mittel (10, 11, 12, 13a, 13b) zur Subtraktion (10) und Multiplikation (11) der Signale umfasst und einen digitalen Phasenschieber, dem das Trägersignal ($T_1$), das den Drehratensensor zu Schwingungen anregt, zugeführt wird, wobei der digitale Phasenschieber das Trägersignal ($T_1$) in Phase mit den Coriolisbeschleunigungsanteilen bringt und das zugehörige Signal ($T_2$) den Mitteln zur Multiplikation zugeführt wird und deren digitales Ausgangssignal entweder einem digitalen Tiefpass (13b) oder einem D/A-Wandler mit nachfolgendem Tiefpass (13, 13a) zugeführt wird und jeweils am Ausgang des Tiefpasses das Drehratensignal (DR) zur Verfügung steht.

2.  Vorrichtung zur Ermittlung einer Drehrate nach Anspruch 1, **dadurch gekennzeichnet, dass** der Drehratensensor einen schwingungsfähigen Körper umfasst, der mittels eines Oszillators in konstante Schwingungen versetzt wird und der Drehratensensor zwei Sensorelemente aufweist, die auf dem schwingungsfähigen Körper angeordnet sind und die Ausgangssignale (A und B) abgeben.

3. Vorrichtung zur Ermittlung einer Drehrate nach Anspruch 1 oder 2, **dadurch gekennzeichnet, dass** die Mittel zur digitalen Subtraktion (11) und die digitale Multiplikation mit Hilfe eines gemeinsamen Boolschen Schaltnetzes gebildet werden, dem die Signale (A, B, $T_2$) zugeführt werden und daß daraus die Informationen positives Schaltsignal ($S_p$), negatives Schaltsignal ($S_n$) zur D/A-Wandlung und analogen Tiefpassfilterung oder Vorzeichen (V) und Datenbit (D) zur digitalen Weiterverarbeitung gebildet werden.

4. Vorrichtung zur Ermittlung einer Drehrate nach Anspruch 3, **dadurch gekennzeichnet, daß** das Boolesche Schaltnetz ausschließlich Mittel zur Komplementbildung (14) sowie NAND-Gatter (15) umfaßt.

5. Vorrichtung zur Ermittlung einer Drehrate nach Anspruch 1, 2 oder 3, **dadurch gekennzeichnet, dass** das Boolesche Schaltnetz nur aus EXOR-Gattern (27) und AND-Gattern (28) besteht.

6. Vorrichtung zur Ermittlung einer Drehrate nach Anspruch 3 oder 4, **dadurch gekennzeichnet, dass** das Boolesche Schaltnetz die Umsetzung einer Wahrheitstabelle mit Hilfe logischer Mittel (15) ist.

7. Vorrichtung zur Ermittlung einer Drehzahl nach einem der vorhergehenden Ansprüche, **dadurch gekennzeichnet, dass** der Digital/Analog-Wandler und Tiefpass Schalter (16, 16a) aufweist, die als CMOS-Ausgänge von Gattern aufgebaut sind und die Eingänge einer nachfolgenden Operationsverstärkerschaltung (17) entweder auf Masse oder auf eine Referenzspannung ($V_{ref}$) legen.

8. Vorrichtung zur Ermittlung einer Drehrate nach einem der Ansprüche 1 bis 6, **dadurch gekennzeichnet, dass** der Digital/Analog-Wandler und Tiefpass Halbleiterschalter (29, 29a) aufweist, die den Strom in die anschließende Operationsverstärkerschaltung (30) schalten.

9. Vorrichtung nach einem der vorhergehenden Ansprüche, **dadurch gekennzeichnet, dass** der Tiefpass (22 oder 31) von einer Ordnung ist, die an die gewünschten Frequenzerfordernisse angepasst wird.

10. Vorrichtung zur Ermittlung einer Drehrate nach einem der vorhergehenden Ansprüche, **dadurch gekennzeichnet, dass** der Phasenschieber (12) eine Phasendrehung bewirkt, die die in den Beschleunigungssensoren auftretenden Phasendrehungen kompensiert, um aus dem Trägersignal ($T_1$) ein Trägersignal ($T_2$) zu erzeugen, das in Phase mit den Coriolis-Beschleunigungsanteilen, die auf die Sensorelemente wirken, ist.

11. Vorrichtung zur Ermittlung einer Drehrate nach einem der vorhergehenden Ansprüche, **dadurch gekennzeichnet, daß** der Phasenschieber (12) wenigstens einen Zähler (23) umfaßt und die Phasenverschiebung digital über den Startwert des Zählers (23) eingestellt wird.

12. Vorrichtung zur Ermittlung einer Drehrate nach einem der Ansprüche 1 bis 9, **dadurch gekennzeichnet, dass** der Phasenschieber eine "Phase-Locked-Loop" (PLL) Schleife umfasst, die einen Takt ($T_2$) erzeugt, der phaseristarr an die Trägerfrequenz ($T_1$) ankoppelt.

13. Vorrichtung zur Ermittlung einer Drehrate nach einem der Ansprüche 1 bis 9, **dadurch gekennzeichnet, dass** der Phasenschieber (12) ein RC-Glied (24, 25) mit einem variablen Widerstand (24) und ein Gatter (26) mit Schmitt-Trigger-Eingang oder einen Komparator mit einer Vergleichsspannung bei der halben Versorgungsspannung umfasst, wobei das Trägersignal ($T_1$) über den Widerstand (24) zugeführt wird und das phasenverschobene Trägersignal ($T_2$) am Ausgang des Gatters (26) oder des Komparators entsteht.

**Claims**

1. Device for determining a rate of rotation, which comprises a rate-of-rotation sensor which outputs two output signals (A and B) which, inter alia, are a measure of the Coriolis acceleration and thus also of the rate of rotation, **characterized in that** the output signals (A, B) are fed as pulse-width-modulated or sigma-delta signals to a digital evaluation circuit (10), which comprises digital means (10, 11, 12, 13a, 13b) for subtraction (10) and multiplication (11) of the signals, and a digital phase shifter to which is fed the carrier signal ($T_1$) which excites the rate-of-rotation sensor to effect oscillations, the digital phase shifter bringing the carrier signal ($T_1$) in phase with the Coriolis acceleration components and the associated signal ($T_2$) being fed to the means for multiplication and the digital output signal thereof being fed either to a digital low-pass filter (13b) or to a D/A converter with downstream low-pass filter (13, 13a) and the rate-of-rotation signal (DR) being available in each case at the output of the low-pass filter.

2. Device for determining a rate of rotation according to Claim 1, **characterized in that** the rate-of-rotation sensor comprises an oscillatory body which is caused to effect constant oscillations by means of an oscillator, and the rate-of-rotation sensor has two sensor elements which are arranged on the oscillatory body and output the output signals (A and B).

3. Device for determining a rate of rotation according to Claim 1 or 2, **characterized in that** the means for digital subtraction (11) and the digital multiplication are formed with the aid of a common Boolean switching network to which the signals (A, B, $T_2$) are fed, and **in that** the information items of positive switching signal ($S_p$), negative switching signal ($S_n$) for D/A conversion and analogue low-pass filtering or sign (V) and data bit (D) for digital further processing are formed therefrom.

4. Device for determining a rate of rotation according to Claim 3, **characterized in that** the Boolean switching network exclusively comprises means for complement formation (14) and NAND gates (15).

5. Device for determining a rate of rotation according to Claim 1, 2 or 3, **characterized in that** the Boolean switching network only comprises EXOR gates (27) and AND gates (28).

6. Device for determining a rate of rotation according to Claim 3 or 4, **characterized in that** the Boolean switching network is the implementation of a truth table with the aid of logic means (15).

7. Device for determining a rotational speed according to one of the preceding claims, **characterized in that** the digital/analogue converter and low-pass filter have switches (16, 16a), which are constructed as CMOS outputs of gates and connect the inputs of a downstream operational amplifier circuit (17) either to earth or to a reference voltage ($V_{ref}$).

8. Device for determining a rate of rotation according to one of Claims 1 to 6, **characterized in that** the digital/analogue converter and low-pass filter have semiconductor switches (29, 29a), which switch the current into the following operational amplifier circuit (30).

9. Device according to one of the preceding claims, **characterized in that** the low-pass filter (22 or 31) is of an order which is adapted to the desired frequency requirements.

10. Device for determining a rate of rotation according to one of the preceding claims, **characterized in that** the phase shifter (12) effects a phase rotation which compensates for the phase rotations occurring in the acceleration sensors, in order to generate from the carrier signal ($T_1$) a carrier signal ($T_2$) which is in phase with the Coriolis acceleration components which act on the sensor elements.

11. Device for determining a rate of rotation according to one of the preceding claims, **characterized in that** the phase shifter (12) comprises at least one counter (23) and the phase shift is set digitally by means of the start value of the counter (23).

12. Device for determining a rate of rotation according to one of Claims 1 to 9, **characterized in that** the phase shifter comprises a phase-locked loop (PLL) which generates a clock ($T_2$) which couples to the carrier frequency ($T_1$) in a phase-locked manner.

13. Device for determining a rate of rotation according to one of Claims 1 to 9, **characterized in that** the phase shifter (12) comprises an RC element (24, 25) with a variable resistor (24) and a gate (26) with a Schmitt trigger input or a comparator with a comparison voltage at half the supply voltage, the carrier signal ($T_1$) being fed via the resistor (24) and the phase-shifted carrier signal ($T_2$) being produced at the output of the gate (26) or of the comparator.

**Revendications**

1. Dispositif pour déterminer une vitesse de rotation à l'aide d'un capteur de vitesse de rotation qui fournit deux signaux de sortie (A) et (B) qui sont entre autre une mesure de l'accélération de Coriolis et ainsi également une mesure de la vitesse de rotation,

**caractérisé en ce que**

les signaux de sortie (A, B) sont appliqués sous la forme de signaux à modulation de largeur d'impulsion ou de signaux sigma-delta à un circuit d'exploitation numérique (10) qui comprend des moyens numériques (10, 11, 12, 13a, 13b) pour effectuer une soustraction (10) et une multiplication (11) des signaux ainsi qu'un déphaseur numérique auquel est appliqué le signal de porteuse ($T_1$) qui excite le capteur de vitesse de rotation pour osciller, dans lequel

le déphaseur numérique met le signal de porteuse ($T_1$) en phase avec les composantes d'accélération de Coriolis et le signal correspondant ($T_2$) est fourni aux moyens de multiplication dont le signal numérique de sortie est appliqué soit à un filtre passe-bas numérique (13b) soit à un convertisseur numérique/analogique D/A suivi d'un filtre passe-bas (13, 13a), et à la sortie du filtre passe-bas on recueille le signal de vitesse de rotation (DR).

2. Dispositif pour déterminer une vitesse de rotation selon la revendication 1,

   **caractérisé en ce que**

   le capteur de vitesse de rotation comporte un organe susceptible d'osciller, qui est mis à des oscillations constantes par un oscillateur et le capteur de vitesse de rotation comporte deux éléments de capteur installés sur l'organe susceptible d'osciller et fournissant des signaux de sortie (A, B).

3. Dispositif pour déterminer une vitesse de rotation selon l'une quelconque des revendications 1 ou 2,

   **caractérisé en ce que**

   les moyens de soustraction numérique (11) et de multiplication numérique forment un réseau de Boole, commun, recevant les signaux (A, B, $T_2$) et à partir de ces signaux on forme les informations d'un signal de commutation positif ($S_p$). d'un signal de commutation négatif ($S_n$) pour la conversion numérique/analogique et le filtrage passe-bas analogique, ou on forme le signe algébrique (V) et le bit de données (D) pour continuer le traitement numérique.

4. Dispositif pour déterminer une vitesse de rotation selon la revendication 3,

   **caractérisé en ce que**

   le circuit de Boole comprend exclusivement des moyens pour former le complément (14) ainsi que des portes NON-ET (15).

5. Dispositif pour déterminer une vitesse de rotation selon l'une quelconque des revendications 1, 2, ou 3,

   **caractérisé en ce que**

   le réseau de Boole ne se compose que de portes EX-OU (27) et de portes ET (28).

6. Dispositif pour déterminer une vitesse de rotation selon l'une quelconque des revendications 3 ou 4,

   **caractérisé en ce que**

   le réseau de Boole est la réalisation d'une table de vérité avec des moyens logiques (15).

7. Dispositif pour déterminer une vitesse de rotation selon l'une quelconque des revendications précédentes,

   **caractérisé en ce que**

   le convertisseur numérique/analogique et le filtre passe-bas comportent des commutateurs (16, 16a) construits comme des sorties de portes CMOS et les entrées d'un circuit amplificateur opérationnel (17) suivant étant mis à la masse ou à une tension de référence ($V_{ref}$).

8. Dispositif pour déterminer une vitesse de rotation selon l'une quelconque des revendications 1 à 6,

   **caractérisé en ce que**

   le convertisseur numérique/analogique et le filtre passe-bas comportent des commutateurs semi-conducteurs (29, 29a) qui commutent le courant dans l'amplificateur opérationnel suivant (30).

9. Dispositif pour déterminer une vitesse de rotation selon l'une quelconque des revendications précédentes,

   **caractérisé en ce que**

   le filtre passe-bas (22 ou 31) est d'un ordre adapté aux conditions de fréquences souhaitées.

10. Dispositif pour déterminer une vitesse de rotation selon l'une quelconque des revendications précédentes,

    **caractérisé en ce que**

    le déphaseur (12) produit une rotation de phase qui compense la rotation de phase produite dans les capteurs d'accélération, pour générer à partir du signal de porteuse ($T_1$) un signal de porteuse ($T_2$) dont la phase correspond aux composantes d'accélération de Coriolis agissant sur les éléments de capteur.

**11.** Dispositif pour déterminer une vitesse de rotation selon l'une quelconque des revendications précédentes, **caractérisé en ce que**
le déphaseur (12) comprend au moins un compteur (23) et le déphasage est réglé de manière numérique par la valeur de départ du compteur (23).

**12.** Dispositif pour déterminer une vitesse de rotation selon l'une quelconque des revendications 1 à 9, **caractérisé en ce que**
le déphaseur comporte une boucle verrouillée en phase (PLL) qui génère une cadence ($T_2$) reliée de manière rigide en phase à la fréquence porteuse (T1).

**13.** Dispositif pour déterminer une vitesse de rotation selon l'une quelconque des revendications 1 à 9, **caractérisé en ce que**
le déphaseur (12) est un élément RC (24, 25) à résistance variable (24) et ayant une porte (26) avec une entrée de déclencheur de Schmitt et un comparateur avec une tension de comparaison pour la demi-tension d'alimentation, le signal de porteuse ($T_1$) étant appliqué par l'intermédiaire de la résistance (24) et le signal de porteuse ($T_2$), déphasé, se trouvant à la sortie de la grille (26) ou du comparateur.

# Fig. 1

# Fig. 2

# Fig. 2a

## Fig. 3

## Fig. 3a

# Fig. 4

Startwert

parallel in    load
Takt —⊳ clock
             carry
Zähler
enable
                    23

clock
enable
D
                    T₂

=1

T₁

# Fig. 5

24                26

T₁ ——▭—————▷—— T₂

25